# EUROPÄISCHE PATENTSCHRIFT

(11) **EP 1 230 413 B1**
(45) Veröffentlichungstag und Bekanntmachung des Hinweises auf die Patenterteilung: **09.07.2003**
(21) Anmeldenummer: 00969314.4
(22) Anmeldetag: 27.09.2000
(51) Int. Cl.: C23C 4/08, C23C 4/06, F16C 33/12, F16J 10/04

(54) **VERFAHREN ZUR HERSTELLUNG VON MIT WENIGSTENS EINER GLEITFLÄCHE VERSEHENEN MASCHINENTEILEN**
METHOD FOR PRODUCING MACHINE COMPONENTS THAT ARE PROVIDED WITH AT LEAST ONE SLIDING SURFACE
PROCEDE POUR PRODUIRE DES PIECES DE MACHINE POURVUES D'AU MOINS UNE SURFACE DE GLISSEMENT

(30) Priorität: 29.10.1999 DE 19952456; 25.11.1999 DE 19956622
(43) Veröffentlichungstag der Anmeldung: 14.08.2002
(73) Patentinhaber: MAN B & W Diesel A/S, 2450 Copenhagen SV (DK)
(72) Erfinder: MOCZULSKI, Lech, DK-2650 Hvidovre (DK)
(74) Vertreter: Munk, Ludwig, Dipl.-Ing.
(86) Internationale Anmeldenummer: EP0009430
(87) Internationale Veröffentlichungsnummer: WO01032948

(56) Entgegenhaltungen:
- EP-A- 0 039 242
- EP-A- 0 051 869
- EP-A- 0 522 438
- WO-A-98/25017
- DE-A- 3 017 100
- US-A- 3 941 903
- US-A- 4 994 235
- US-A- 5 080 056
- US-A- 5 296 057
- PATENT ABSTRACTS OF JAPAN vol. 005, no. 168 (C-077), 27. Oktober 1981 (1981-10-27) & JP 56 096066 A (TOYOTA MOTOR CORP), 3. August 1981 (1981-08-03)
- PATENT ABSTRACTS OF JAPAN vol. 013, no. 340 (M-857), 31. Juli 1989 (1989-07-31) & JP 01 116326 A (TOYOTA MOTOR CORP), 9. Mai 1989 (1989-05-09)
- PATENT ABSTRACTS OF JAPAN vol. 018, no. 242 (C-1197), 10. Mai 1994 (1994-05-10) & JP 06 025821 A (TOYOTA MOTOR CORP), 1. Februar 1994 (1994-02-01)
- PATENT ABSTRACTS OF JAPAN vol. 015, no. 112 (C-0815), 18. März 1991 (1991-03-18) & JP 03 002340 A (MIYOSHI KOBUKIN KOGYO KK), 8. Januar 1991 (1991-01-08)
- PATENT ABSTRACTS OF JAPAN vol. 017, no. 108 (C-1032), 5. März 1993 (1993-03-05) & JP 04 295068 A (AGENCY OF IND SCIENCE & TECHNOL;OTHERS: 01), 20. Oktober 1992 (1992-10-20)

## Beschreibung

Die Erfindung betrifft ein Verfahren gemäß Oberbegriff des Anspruchs 1.

Ein Verfahren dieser Art ist bereits bekannt. Die JP 01 1163 26 A zeigt eine Bremsscheibe, die im Bereich der Gleitflächen beschichtet ist. Zur Bildung der Beschichtung findet eine Pulvermischung Verwendung, die alle Beschichtungsmaterialien in Pulverform, hier einen aus einer Aluminium-Bronze bestehenden Anteil, einen aus einer Chromlegierung bestehenden Anteil und einen aus Carbiden und/oder Oxiden etc. bestehenden Anteil enthält und die im Thermosprühverfahren auf das Grundmaterial aufgebracht wird.

Die US-A 3941 903 enthält ein Verfahren zur Herstellung einer verschleißfesten Beschichtung eines Lagerteils. Zur Bildung der Beschichtung findet auch hier eine Pulvermischung Verwendung, die alle Beschichtungsmaterialien in Pulverform, hier einen aus Aluminium-Bronze bestehenden Anteil und einen durch Oxide, Carbide oder dergleichen gebildeten Anteil enthält und die im Plashma-Sprühverfahren, durch Flammsprühen oder durch Detonation auf das Trägermaterial aufgetragen wird.

Die WO 98 25 017 A der Anmelderin enthält ein Zylinderelement, wie eine Zylinderbüchse, einen Kolben, Kolbenringe etc. von Dieselmotoren, die im Bereich ihrer Gleitfläche mit einer im Thermosprühverfahren aufgesprühten Beschichtung versehen sind, die aus Aluminium-Bronze besteht, in die harte Teilchen in Form von Oxiden, Carbiden und dergleichen eingelagert sein können. Der genannten WO-A ist nicht entnehmbar, wie hier eine Vermischung der beim Sprühvorgang geschmolzenen und der beim Sprühvorgang nicht geschmolzenen Materialien erfolgen soll.

Hiervon ausgehend ist es die Aufgabe der vorliegenden Erfindung, ein Verfahren eingangs erwähnter Art so zu verbessern, dass die Beschichtung, die gegenüber den sonstigen, beim Sprühvorgang schmelzenden Beschichtungsmaterialien härtere Einlagerungen in Form eines beim Sprühvorgang nicht geschmolzenen Pulvers enthält, einfach und kostengünstig herstellbar ist.

Diese Aufgabe wird durch das Kennzeichen des Anspruchs 1 gelöst.

Die Verwendung eines Hohldrahts, dessen Hohlraum ein die Einlagerungen bildendes Pulver enthält, stellt sicher, dass dieses Pulver beim Abschmelzen des Hohldrahts automatisch in die Schmelze und damit in den Sprühstrahl gelangt und so zusammen mit den übrigen, geschmolzenen Materialien aufgesprüht wird. Ein zusätzlicher Mischaufwand ist dabei in vorteilhafter Weise nicht erforderlich. Ein weiterer Vorteil ist darin zu sehen, dass auf einfache Weise eine zuverlässige Dosierung und gleichmäßige Verteilung der Einlagerungen erreichbar ist.

Vorteilhafte Ausgestaltungen sind in den Unteransprüchen angegeben.

Nachstehend werden einige Beispiele anhand der Zeichnung erläutert.

In der nachstehend beschriebenen Zeichnung zeigen:
- Figur 1: ein Anwendungsbeispiel in Form eines Ausschnitts aus einem Zylinder eines Großmotors,
- Figur 2: eine schematische Darstellung einer Vorrichtung zur Durchführung des erfindungsgemäßen Verfahrens und
- Figur 3: eine Ausgestaltung der Vorrichtung gemäß Figur 2.

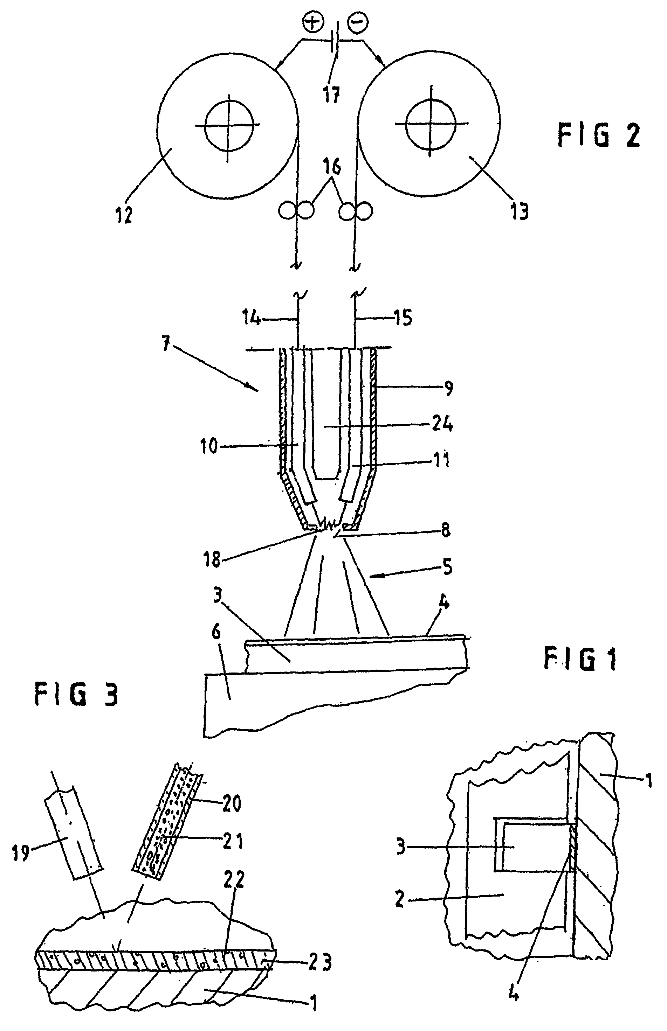

Hauptanwendungsgebiet der vorliegenden Erfindung sind Großmotoren, wie beispielsweise als Schiffsantriebe Verwendung findende Zweitakt-Großdieselmotoren, und dort insbesondere die mit Laufflächen versehenen Teile wie die Zylinderbüchsen, Kolben, Kolbenringe etc.. Das der Figur 1 zu Grunde liegende Beispiel zeigt eine Zylinderbüchse 1 mit einem hierin angeordneten Kolben 2, der mit Kolbenringen 3 versehen ist. Diese sind hier im Bereich ihrer umfangsseitigen Lauffläche mit einer Beschichtung 4 versehen, welche die Lebensdauer verlängern soll. Selbstverständlich wäre es auch denkbar, gleichzeitig oder alternativ auch die Lauffläche der Zylinderbüchse 1 und/oder das Kolbenhemd etc. zu beschichten.

Die der Figur 2 zu Grunde liegende Vorrichtung enthält eine Aufnahmeeinrichtung, hier in Form eines Tisches 6, zur Aufnahme des zu beschichtenden Grundmaterials, hier eines Kolbenrings 3. Mit Abstand oberhalb des Tisches 6 ist ein Sprühkopf 7 vorgesehen. Dieser besitzt ein rohrförmiges, an seinem dem Tisch zugewandten, vorderen Ende konisch verengtes und mit einer Auslaßöffnung 8 versehenes Gehäuse 9. Dieses kann mit einem hier nicht näher dargestellten Griff für eine manuelle Betätigung versehen oder auf einem dem Tisch 6 zugeordneten Gestell verschiebbar aufgenommen sein. Selbstverständlich wäre es auch denkbar, den Sprühkopf 7 stationär anzuordnen und den Tisch 6 mit einer verschiebbaren Werkstückaufnahme zu versehen.

Der Auslaßöffnung 8 sind zwei Drahtzuleitungen 10, 11 zugeordnet, die mit geringem Abstand von der Auslaßöffnung 8 enden. Den Drahtzuleitungen 10, 11 ist jeweils ein von einer zugeordneten Trommel 12, 13 abziehbarer Draht 14 bzw. 15 zuführbar. Der Drahtvorschub wird durch jeweils eine Vorschubeinrichtung 16 bewerkstelligt.

Die Trommeln 12, 13 und damit auch die hiervon abgezogenen Drähte 14, 15 sind an unterschiedliche Pole einer Stromquelle 17 angeschlossen. Die Stromstärke der Stromquelle 17 ist so bemessen, dass sich zwischen den Enden der aus den Drahtzuleitungen 10, 11 austretenden Drähte ein elektrischer Lichtbogen 18 ergibt, der dazu führt, dass die vorderen Enden der Drähte 14, 15 auch im Falle unterschiedlicher Schmelztemperaturen der den Drähten 14 bzw. 15 zu Grunde liegenden Materialien abschmelzen. Die Schmelztemperaturen der den Drähten 14 bzw. 15 zu Grunde liegenden Materialien können daher unterschiedlich sein. In der Regel liegt die Schmelztemperatur von Aluminium-Bronze niedriger als die Schmelztemperatur der erwähnten Chromlegierungen.

Da die Drähte 14, 15 kontinuierlich vorgeschoben werden, wird laufend Schmelze produziert. Diese wird mittels eines auf den Tisch 6 gerichteten Gasstrahls in Form kleiner Tröpfchen weggeblasen. Der so gebildete Sprühstrahl 5 bildet beim Auftreffen auf das zu beschichtende Grundmaterial die Beschichtung 4, die dabei sowohl das Material des Drahts 14 als auch das Material des Drahts 15 enthält. Zur Erzeugung des erwähnten Gasstrahls ist ein oberhalb der abschmelzenden Enden der Drähte 14,15 düsenförmig endendes Strahlrohr 24 vorgesehen, das an eine geeignete, nicht dargestellte Druckgasquelle angeschlossen ist.

Beim Beispiel gemäß Figur 2 ist lediglich ein Sprühkopf 7 für zwei Drähte vorgesehen, zwischen denen der Lichtbogen 18 gezündet wird. Es wäre aber auch denkbar, jedem Draht einen eigenen Sprühkopf zuzuordnen, wobei jeweils zwischen zwei Sprühkopfteilen, z.B. zwischen einer Drahtauslassdüse und einem diese umfassenden Mantelrohr, ein Lichtbogen gezündet werden kann, der durch einen Gasstrahl eines vom Mantelrohr zugeführten Gases ausgetrieben werden kann.

In einfachen Fällen genügt es, wenn die Beschichtung 4 einlagig ist; da vielfach bereits durch einen geeigneten Materialmix die gewünschten Eigenschaften erzielbar sind. Eine derartige Beschichtung kann in vorteilhafter Weise in einem Arbeitsgang aufgebracht werden. Es ist aber auch eine mehrlagige, z.B. zweilagige Ausgestaltung der Beschichtung 4 möglich und oft vorteilhaft.

Bei einer mehrlagigen Beschichtung können zweckmäßig eine erste, vergleichsweise weiche Lage und darauf eine vergleichsweise harte Lage vorgesehen werden. Die erste Lage ergibt dabei eine gute Anbindung der äußeren Lage an das Grundmaterial. Für die äußere Lage kann daher ein eine sehr große Härte ergebender Materialmix Verwendung finden, der ohne die weichere erste Lage einer hohen Abplatzgefahr unterläge. Die äußere Lage kann dabei ohne Weiteres 3 bis 5 mal härter als das Grundmaterial sein, was eine gute Standfestigkeit ergibt. Der Materialmix für die erste Lage wird zweckmäßig so gewählt, dass sich eine zwischen den Härten des Grundmaterials und der äußeren Lage liegende Härte und dementsprechend geringe Härtesprünge ergeben. Auch die Korossionsbeständigkeit lässt sich durch entsprechende Materialwahl beeinflussen.

Bei einer mehrlagigen Beschichtung lässt sich in vorteilhafter Weise eine vergleichsweise große Gesamtdicke der Beschichtung erreichen. Eine derartige Beschichtung kann nach dem Auftragvorgang etwas komprimiert werden, was in vorteilhafter Weise zu einer Erhöhung der Härte führt. Die in dieser Hinsicht erwünschte Komprimierung kann durch einen Bearbeitungsvorgang, z.B. Schleifvorgang, erreicht werden, bzw. ergibt sich während des Betriebs, insbesondere während der Einlaufphase, von selbst. Bei einer einlagigen Beschichtung ist die genannte Komprimierung ebenfalls möglich, wenn auch im Hinblick auf die geringere Dicke in geringerem Maße.

Die Beschichtung 4 besteht jeweils aus einer Aggregation von Aluminium-Bronze und wenigstens einem weiteren, nicht mit der in Form einer Schmelze aufgebrachten Aluminium-Bronze legierten Material. In jedem Fall sind dabei harte, beim Sprühvorgang nicht schmelzende Einlagerungen vorgesehen. Zusätzlich kann wenigstens ein weiteres, schmelzendes, aber mit der Aluminium-Bronze keine Legierung eingehendes Material, z.B. eine Chromlegierung, die härter als die Aluminium-Bronze ist, vorgesehen sein. Bei einer mehrlagigen Beschichtung können die einzelnen Lagen jeweils aus demselben Materialmix oder unterschiedlichen Materialmischungen bestehen. Die Aluminium-Bronze fungiert dabei praktisch als Matrix, die das weitere Material bzw. die weiteren Materialien aufnimmt.

Der Draht 14 soll im dargestellten Beispiel aus einer Aluminium-Bronze bestehen. Der andere Draht 15 kann das weitere zur Bildung der Beschichtung 4 verwendete Material enthalten, das mit der Aluminium-Bronze keine Legierung eingeht. Durch eine Aggregation von nicht miteinander legierten Materialien lassen sich die Qualitäten der das Matrixmaterial bildenden Aluminium-Bronze in jeder gewünschten Richtung verbessern. Die Aluminium-Bronze besitzt in der Regel gute Einlaufeigenschaften. Durch zusätzliche Verwendung eines weiteren beim Auftragen schmelzenden Materials, das härter als Aluminium-Bronze ist, beispielsweise eine Chromlegierung, lassen sich zusätzlich eine größere Härte und damit eine gute Verschleiß- und Korossionsfestigkeit erreichen. Auch die Korossionsbeständigkeit lässt sich durch eine geeignete Wahl des Materials beeinflussen. Durch die oben bereits genannten noch härteren Einlagerungen werden die genannten Wirkungen noch verstärkt.

Durch Wahl der Legierungsbestandteile der Aluminium-Bronze lassen sich die Eigenschaften der durch die Aluminium-Bronze gebildeten Matrix beeinflussen. So bildet eine Aluminium-Bronze mit 7% bis 12%, vorzugsweise 9% Al, 0,5% bis 2%, vorzugsweise 1% Fe und Rest Cu eine vergleichsweise weiche Matrix. Sofern eine vergleichsweise harte Matrix erwünscht ist, kann eine Aluminium-Bronze mit 14% Al, 2% bis 8%, vorzugsweise 4%Fe, 0,5% bis 5%, vorzugsweise 2% Mn und Rest Cu Verwendung finden.

Eine kostengünstige Chromlegierung kann 10% bis 15%, vorzugsweise 13% Cr, 0,2% bis 0,5%, vorzugsweise 0,35% C und Rest Fe enthalten. Zur Steigerung der Härte können die Anteile geändert und weitere Elemente hinzugenommen bzw. ausgetauscht werden. So ergibt sich mit einer Chromlegierung mit 25% bis 35%, vorzugsweise 28% Cr, 2% bis 7%, vorzugsweise 5% C, 0,5% bis 3%, vorzugsweise 1% Mn und Rest Fe eine größere Härte als mit der oben erwähnten Chromlegierung. Eine weitere Steigerung läßt sich mit einer Chromlegierung mit 25% bis 35%, vorzugsweise 28% Cr, 2% Mn, 3,7% B, 1,7% Si und Rest Fe erreichen, wobei die Anteile von Mn, B und Si um ± 1% variieren können. Eine besonders große Härte ergibt eine Chromlegierung mit 40% bis 50% Cr, 6% bis 12% Mo, 2% bis 5% C, 2% bis 5% Fe und Rest Ni. Vorzugsweise können dabei 45% Cr, 9% Mo, 3,5% C, 3,5% Fe und Rest Ni vorgesehen sein.

Jede der vorstehend erwähnten Chromlegierungen kann mit jeder der weiter oben erwähnten Aluminium-Bronzen kombiniert werden. Dabei ergibt sich bei einer Kombination mit der härteren Aluminium-Bronze auch eine größere Härte der Beschichtung und umgekehrt. Auf diese Weise können für jeden Einzelfall günstige Beschichtungen erzeugt werden. Versuche haben ergeben, dass eine Kombination einer der oben genannten Aluminium-Bronzen mit der ersten, vorstehend genannten Chromlegierung mit jeweils vorzugsweise 13% Cr, 0,2% bis 0,5% C und Rest Fe eine besonders gute Kolbenhemd-Beschichtung ergibt, wobei deren Härte durch Verwendung der einen oder anderen Aluminium-Bronze beeinflußt werden kann. Eine Kombination der einen oder anderen Aluminium-Bronze oben genannter Art mit der zweiten oder dritten Chromlegierung mit jeweils vorzugsweise 28% Cr, 5% C, 1% Mn und Rest Fe bzw. 28% Cr, 2% Mn, 3,7% B, 1,7% Si und Rest Fe ergibt eine für Kolbenringe besonders gut geeignete Beschichtung.

Die Kombination der einen oder anderen Aluminium-Bronze oben genannter Art mit einer Chromlegierung mit 40% bis 50% Cr, 6% bis 12% Mo, 2% bis 5% C, 2% bis 5% Fe und Rest Ni oder vorzugsweise 45% Cr, 9% Mo, 3,5% C, 3,5% Fe und Rest Ni ergibt eine besonders gute Zylinderbüchsen-Beschichtung, wobei wiederum, wie auch in den anderen Fällen die Gesamthärte durch Verwendung der Aluminium-Bronze mit jeweils vorzugsweise 9% Al, 1% Fe und Rest Cu nach unten geführt und durch Verwendung der Aluminium-Bronze mit jeweils vorzugsweise 14% Al, 4% Fe, 2% Mn und Rest Cu angehoben werden kann.

Weitere Möglichkeiten zur Einflußnahme auf die Eigenschaften der Beschichtung bestehen in der Wahl des verwendeten Ausblasgases. In einfachen Fällen kann hierfür Luft Verwendung finden. Es wäre aber auch denkbar N₂, Argon, Helium oder Wasserstoff oder Kombinationen dieser Gase zu verwenden. Bei der Verwendung von Luft ist die Bildung von Oxiden begünstigt, was die Verschleißfestigkeit verbessert. Bei der Verwendung von N₂ entstehen weniger Oxide, was eine vergleichsweise große Härte erwarten läßt. Bei der Verwendung von Argon und/oder Helium und/oder Wasserstoff können vergleichsweise hohe Temperaturen zur Anwendung kommen, was eine besonders hohe Kompaktheit der hergestellten Beschichtung erwarten läßt.

Im Zusammenhang mit der Kombination einer der oben genannten Aluminium-Bronzen mit der Chromlegierung mit jeweils vorzugsweise 13% Cr, 0,2% bis 0,5% C und Rest Fe hat sich die Verwendung von Luft als Ausblasgas als besonders zweckmäßig erwiesen. Im Zusammenhang mit der Chromlegierung mit jeweils vorzugsweise 28% Cr, 5% C, 1% Mn und Rest Fe hat sich die Verwendung von N₂ als Ausblasgas als besonders zweckmäßig erwiesen. Im Zusammenhang mit der Chromlegierung mit jeweils vorzugsweise 28% Cr, 2% Mn, 3,7% B, 1,7% Si und Rest Fe ist erfahrungsgemäß Argon als Ausblasgas zu bevorzugen. Im Zusammenhang mit der Chromlegierung mit jeweils vorzugsweise 45% Cr, 9% Mo, 3,5% C, 3,5% Fe und Rest Ni ist Helium oder eine Kombination von Helium und/oder Argon und/oder N₂ als Ausblasgas zu bevorzugen.

Weitere Variationsmöglichkeiten bestehen in der Wahl der Vorschubgeschwindigkeit der Drähte 14, 15 und/oder der Dicke der Drähte 14, 15. Diese Größen werden zweckmäßig so gewählt, dass der Anteil der Aluminium-Bronze an der Beschichtung zumindest 50%, zweckmäßig über 50% beträgt, so dass sich eine geräumige Matrix für das weitere, noch hinzukommende Material ergibt.

Was oben allgemein zur Beschichtung ausgeführt wurde, gilt bei einer mehrlagigen Beschichtung selbstverständlich auch für die einzelnen Lagen.

Aus der Figur 3 ergeben sich die vorderen Enden von zwei Drähten 19 und 20, die abgeschmolzen werden, wobei hier der eine Draht 19 als massiver, aus einer Aluminium-Bronze oben genannter Art bestehender Draht ausgebildet ist. Der andere Draht 20 ist als Hohldraht ausgebildet, der aus einer Chromlegierung oben genannter Art, vorzugsweise aus der Chromlegierung mit 40% bis 50% Cr, 6% bis 12% Mo, 2% bis 5% C, 2% bis 5% Fe und Rest Ni besteht, welche die größte Härte der genannten Chromlegierungen aufweist. Der Hohlraum des Hohldrahts 20 enthält eine Füllung 21, die durch in Pulverform vorliegende Carbide oder Oxide, beispielsweise WoC, CrC, NiC oder CrO gebildet wird. Dieses Pulver wird beim Abschmelzen der Drähte 19, 20 frei, ohne selbst zu schmelzen und wird mit den Tröpfchen der geschmolzenen Materialien durch den zugeführten Gasstrahl weggetragen.

Die in Pulverform vorliegenden Carbide bzw. Oxide werden dementsprechend zusammen mit den geschmolzenen Materialien zur Bildung einer Beschichtung 22 auf das Grundmaterial, hier auf die Zylinderbüchse 1 aufgesprüht und bilden dabei in die Beschichtung 22 eingelagerte Körner 23, die härter als die übrigen Beschichtungsmaterialien inform der Aluminium-Bronze und der Chromlegierung sind. Sobald während des Betriebs des beschichteten Maschinenteils die zusammen mit den geschmolzenen, den Draht 19 und den Hohldraht 20 bildenden Materialien aufgesprühten, pulverförmig vorliegenden Carbide bzw. Oxide freigelegt sind, führen diese zu einem gewissen Hon-Effekt, durch den nach der Einlaufphase an der Oberfläche des Gegenwerkstücks sich befindende Einlaufrückstände entfernt werden. Gleichzeitig bilden sich Öltaschen, die eine zuverlässige Schmierung gewährleisten.

Vorstehend wurden zwar einige bevorzugte Ausführungsbeispiele der Erfindung näher erläutert, ohne dass jedoch hiermit eine Beschränkung verbunden sein soll. Vielmehr stehen dem Fachmann eine Reihe von Möglichkeiten zur Verfügung, um den allgemeinen Lösungsgedanken an die Verhältnisse des Einzelfalls anzupassen. So wäre es beispielsweise denkbar, dass die Beschichtung bzw. eine Lage der Beschichtung nur durch Aluminium-Bronze und Einlagerungen in Form der vorstehend erwähnten Körner 23 gebildet wird. Zur Herstellung einer derartigen Beschichtung könnte beispielsweise ein aus der gewünschten Aluminium-Bronze bestehender Hohldraht Verwendung finden, der mit dem zur Bildung der Einlagerungen vorgesehenen Pulvermaterial gefüllt ist.

## Patentansprüche

1. Verfahren zur Herstellung von mit wenigstens einer Gleitfläche versehenen Maschinenteilen, insbesondere Kolbenringen (3) und/oder Kolben (2) und/oder Zylinderbüchsen (1) von Motoren, vorzugsweise Zweitakt-Großdieselmotoren, die im Bereich ihrer Gleitfläche mit einer im Thermosprühverfahren auf das Grundmaterial aufgebrachten Beschichtung (4 bzw. 22) versehen sind, die durch eine Aggregation von Aluminium-Bronze und wenigstens einem weiteren, hiermit nicht legierten Material gebildet wird, wobei die Beschichtung (22) gegenüber den sonstigen Beschichtungsmaterialien härtere Einlagerungen (23) enthält, die in Form eines beim Sprühvorgang nicht geschmolzenen Pulvers mit den sonstigen, zum Sprühen geschmolzenen Beschichtungsmaterialien aufgesprüht werden, **dadurch gekennzeichnet, dass** zur Bildung des Sprühstrahls wenigstens ein als Hohldraht ausgebildeter Draht (20) abgeschmolzen wird, dessen Hohlraum das die Einlagerungen (23) bildende Pulver enthält.

2. Verfahren nach Anspruch 1, **dadurch gekennzeichnet, dass** die Beschichtung (4,22) neben Aluminium-Bronze ein weiteres, beim Sprühvorgang schmelzendes Material, das härter als die verwendete Aluminium-Bronze ist, enthält.

3. Verfahren nach Anspruch 2, **dadurch gekennzeichnet, dass** das weitere, beim Sprühvorgang schmelzende Material eine Chromlegierung ist.

4. Verfahren nach Anspruch 3, **dadurch gekennzeichnet, dass** die Chromlegierung zumindest die Elemente Cr, C und Fe enthält.

5. Verfahren nach einem der vorhergehenden Ansprüche, **dadurch gekennzeichnet, dass** die Chromlegierung 10% bis 15% Cr, 0,2% bis 0,5% C und Rest Fe enthält.

6. Verfahren nach Anspruch 5, **dadurch gekennzeichnet, dass** die Chromlegierung 13% Cr, 0,35% C und Rest Fe enthält.

7. Verfahren nach einem der vorhergehenden Ansprüche 1 bis 4, **dadurch gekennzeichnet, dass** die Chromlegierung 25% bis 35% Cr, 2% bis 7% C, 0,5% bis 3% Mn und Rest Fe enthält.

8. Verfahren nach Anspruch 7, **dadurch gekennzeichnet, dass** die Chromlegierung 28% Cr, 5% C, 1% Mn und Rest Fe enthält.

9. Verfahren nach einem der vorhergehenden Ansprüche 1 bis 3, **dadurch gekennzeichnet, dass** die Chromlegierung 25% bis 35% Cr, 2% Mn, 3,7% B, 1,7% Si und Rest Fe enthält.

10. Verfahren nach Anspruch 9, **dadurch gekennzeichnet, dass** der Cr-Anteil 28% beträgt.

11. Verfahren nach einem der vorhergehenden Ansprüche 1 bis 3, **dadurch gekennzeichnet, dass** die Chromlegierung 40% bis 50% Cr, 6% bis 12% Mo, 2% bis 5% C, 2% bis 5% Fe und Rest Ni enthält.

12. Verfahren nach Anspruch 11, **dadurch gekennzeichnet, dass** die Chromlegierung 45% Cr, 9% Mo, 3,5% C, 3,5% Fe und Rest Ni enthält.

13. Verfahren nach einem der vorhergehenden Ansprüche, **dadurch gekennzeichnet, dass** die Aluminium-Bronze zumindest die Elemente Al, Fe und Cu enthält.

14. Verfahren nach einem der vorhergehenden Ansprüche, **dadurch gekennzeichnet, dass** die Aluminium-Bronze 7% bis 12% Al, 0,5% bis 2% Fe und Rest Cu enthält.

15. Verfahren nach Anspruch 14, **dadurch gekennzeichnet, dass** die Aluminium-Bronze 9% Al, 1% Fe und Rest Cu enthält.

16. Verfahren nach einem der vorhergehenden Ansprüche 1 bis 13, **dadurch gekennzeichnet, dass** die Aluminium-Bronze 13% bis 18% Al, 2% bis 8% Fe, 0,5% bis 5% Mn und Rest Cu enthält.

17. Verfahren nach Anspruch 16, **dadurch gekennzeichnet, dass** die Aluminium-Bronze 14% Al, 4% Fe, 2% Mu und Rest Cu enthält.

18. Verfahren nach einem der vorhergehenden Ansprüche, **dadurch gekennzeichnet, dass** der Anteil der Aluminium-Bronze an der Beschichtung zumindest 50% beträgt.

19. Verfahren nach einem der vorhergehenden Ansprüche, **dadurch gekennzeichnet, dass** die beim Sprühvorgang nicht schmelzenden Einlagerungen (23) durch Carbide und/oder Oxide gebildet werden.

20. Verfahren nach einem der vorhergehenden Ansprüche, **dadurch gekennzeichnet, dass** zur Bildung eines Sprühstrahls (5) zwei Drähte (14,15; 19,20) in einer vorgegebenen Entfernung vom Grundmaterial abgeschmolzen und durch wenigstens einen auf das Grundmaterial gerichteten Gasstrahl beaufschlagt werden, wobei ein Draht (14,19) zumindest der Aluminium-Bronze und ein Draht (15, 20) wenigstens einem weiteren Material zugeordnet sind.

21. Verfahren nach einem der vorhergehenden Ansprüche, **dadurch gekennzeichnet, dass** zum Abschmelzen der Drähte (14,15;19,20) wenigstens ein elektrischer Lichtbogen (18) erzeugt wird.

22. Verfahren nach Anspruch 21, **dadurch gekennzeichnet, dass** die Drähte (14,15;19,20) an unterschiedliche Pole einer Stromquelle (17) angeschlossen sind, wobei vorzugsweise der der Aluminium-Bronze zugeordnete Draht (14,19) an den Plus-Pol und der weitere Draht (15,20) an den Minus-Pol angeschlossen sind.

23. Verfahren nach einem der vorhergehenden Ansprüche 20 bis 22, **dadurch gekennzeichnet, dass** der Durchmesser des der Aluminium-Bronze zugeordneten Drahts (14,19) größer als der Durchmesser des anderen Drahts (15,20) ist.

24. Verfahren nach einem der vorhergehenden Ansprüche, **dadurch gekennzeichnet, dass** der zum Sprühen erzeugte Gasstrahl Luft und/oder Stickstoff und/oder Argon und/oder Helium und/oder Wasserstoff enthält.

25. Verfahren nach einem der vorhergehenden Ansprüche, **dadurch gekennzeichnet, dass** die Beschichtung (4,22) mehrlagig aufgesprüht wird.

26. Verfahren nach Anspruch 25, **dadurch gekennzeichnet, dass** bei einer mehrlagigen Beschichtung (4,22) die äußere(n) Lage(n) dicker als die innere Lage ausgebildet wird bzw. werden.

27. Verfahren nach Anspruch 25 oder 26, **dadurch gekennzeichnet, dass** bei einer mehrlagigen Beschichtung (4,22) die äußere(n) Lage(n) härter als die innere Lage ausgebildet wird bzw. werden.

28. Verfahren nach einem der vorhergehenden Ansprüche 1 bis 24, **dadurch gekennzeichnet, dass** die Beschichtung (4,22) einlagig aufgesprüht wird.

29. Verfahren nach einem der vorhergehenden Ansprüche, **dadurch gekennzeichnet, dass** die Beschichtung (4,22) nach dem Aufsprühen verdichtet wird.

## Claims

1. Method for producing machine parts that are provided with at least one slide face, in particular piston rings (3) and/or pistons (2) and/or cylinder liners (1) of engines, preferably large two-stroke diesel engines, which in the region of their slide face are provided with a coating (4 and 22 respectively) that is applied to the base material using the thermo-spraying method and is formed by an aggregation of aluminium bronze and at least one further material that is not alloyed therewith, with the coating (22) containing in relation to the other coating materials comparatively hard inclusions (23) which in the form of a powder that is not melted during the spraying process are sprayed on with the other coating materials that are melted for spraying purposes, **characterized in that** in order to form the spray jet at least one wire (20) that is formed as a hollow wire and whose hollow space contains the powder that forms the inclusions (23) is melted off.

2. Method according to claim I, **characterized in that** the coating (4, 22) contains in addition to aluminium bronze a further material that melts during the spraying process and is harder than the aluminium bronze that is used.

3. Method according to claim 2, **characterized in that** the further material that melts during the spraying process is a chromium alloy.

4. Method according to claim 3, **characterized in that** the chromium alloy contains at least the elements Cr, C and Fe.

5. Method according to one of the preceding claims, **characterized in that** the chromium alloy contains 10% to 15% Cr, 0.2% to 0.5% C and the remainder as Fe.

6. Method according to claim 5, **characterized in that** the chromium alloy contains 13% Cr, 0.35% C and the remainder as Fe.

7. Method according to one of the preceding claims 1 to 4, **characterized in that** the chromium alloy contains 25% to 35% Cr, 2% to 7% C, 0.5% to 3% Mn and the remainder as Fe.

8. Method according to claim 7, **characterized in that** the chromium alloy contains 28% Cr, 5% C, 1% Mn and the remainder as Fe.

9. Method according to one of the preceding claims 1 to 3, **characterized in that** the chromium alloy contains 25% to 35% Cr, 2% Mn, 3.7% B, 1.7 % Si and the remainder as Fe.

10. Method according to claim 9, **characterized in that** the Cr portion amounts to 28%.

11. Method according to one of the preceding claims 1 to 3, **characterized in that** the chromium alloy contains 40% to 50% Cr, 6% to 12% Mo, 2% to 5% C, 2% to 5% Fe and the remainder as Ni.

12. Method according to claim 11, **characterized in that** the chromium alloy contains 45% Cr, 9% Mo, 3.5% C, 3.5% Fe and the remainder as Ni.

13. Method according to one of the preceding claims, **characterized in that** the aluminium bronze contains at least the elements Al, Fe and Cu.

14. Method according to one of the preceding claims, **characterized in that** the aluminium bronze contains 7% to 12% Al, 0.5% to 2% Fe and the remainder as Cu.

15. Method according to claim 14, **characterized in that** the aluminium bronze contains 9% Al, 1% Fe and the remainder as Cu.

16. Method according to one of the preceding claims 1 to 13, **characterized in that** the aluminium bronze contains 13% to 18% Al, 2% to 8% Fe, 0.5% to 5% Mn and the remainder as Cu.

17. Method according to claim 16, **characterized in that** the aluminium bronze contains 14% Al, 4% Fe, 2% Mu and the remainder as Cu.

18. Method according to one of the preceding claims, **characterized in that** the proportion of aluminium bronze in the coating amounts to at least 50%.

19. Method according to one of the preceding claims, **characterized in that** the inclusions (23) which do not melt during the spraying process are formed by carbides and/or oxides.

20. Method according to one of the preceding claims, **characterized in that** in order to form a spray jet (5) two wires (14, 15; 19, 20) are melted off at a predetermined distance from the base material and at least one gas jet that is directed onto the base material is applied to them, with one wire (14, 19) being associated at least with the aluminium bronze and one wire (15, 20) being associated at least with a further material.

21. Method according to one of the preceding claims, **characterized in that** at least one electric arc (18) is generated in order to melt off the wires (14, 15; 19, 20).

22. Method according to claim 21, **characterized in that** the wires (14, 15; 19, 20) are connected to different poles of a current source (17), with preferably the wire (14, 19) that is associated with the aluminium bronze being connected to the positive pole and the further wire (15, 20) being connected to the negative pole.

23. Method according to one of the preceding claims 20 to 22, **characterized in that** the diameter of the wire (14, 19) associated with the aluminium bronze is greater than the diameter of the other wire (15, 20).

24. Method according to one of the preceding claims, **characterized in that** the gas jet that is produced for spraying purposes contains air and/or nitrogen and/or argon and/or helium and/or hydrogen.

25. Method according to one of the preceding claims, **characterized in that** the coating (4, 22) is sprayed on in multiple layers.

26. Method according to claim 25, **characterized in that** in the case of a multi-layer coating (4, 22) the outer layer(s) is/are formed so as to be thicker than the inner layer.

27. Method according to claim 25 or 26, **characterized in that** in the case of a multi-layer coating (4, 22) the outer layer(s) is/are formed so as to be harder than the inner layer.

28. Method according to one of the preceding claims 1 to 24, **characterized in that** the coating (4, 22) is sprayed on as a single layer.

29. Method according to one of the preceding claims, **characterized in that** the coating (4, 22) is compacted after having been sprayed on.

## Revendications

1. Procédé pour produire des pièces de machine pourvues d'au moins une surface de glissement, en particulier des segments de piston (3) et/ou des pistons (2) et/ou des chemises de cylindre (1) de moteurs, de préférence de grands moteurs Diesel à deux temps, qui, dans la zone de leur surface de glissement, sont pourvus d'un revêtement (4 ou bien 22) qui est appliqué sur la matière de base par le procédé de pulvérisation thermique et qui est formé par une agrégation de bronze d'aluminium et d'au moins une autre matière non pas alliée avec cela, le revêtement (22) comprenant des inclusions (23) qui sont plus dures par rapport aux autres matières de revêtement et qui sont appliquées par pulvérisation sous forme d'une poudre non fondue lors de l'opération de pulvérisation, conjointement avec les autres matières de revêtement fondues pour la pulvérisation, **caractérisé par le fait que**, pour la formation du jet de pulvérisation, on fait fondre peu à peu au moins un fil métallique (20) réalisé comme fil creux, dont l'espace creux comprend la poudre formant les inclusions (23).

2. Procédé selon la revendication 1, **caractérisé par le fait que** le revêtement (4, 22) comprend, outre le bronze d'aluminium, une autre matière qui fond lors de l'opération de pulvérisation et qui est plus dure que le bronze d'aluminium utilisé.

3. Procédé selon la revendication 2, **caractérisé par le fait que** l'autre matière qui fond lors de l'opération de pulvérisation est un alliage de chrome.

4. Procédé selon la revendication 3, **caractérisé par le fait que** l'alliage de chrome comprend au moins les éléments Cr, C et Fe.

5. Procédé selon l'une des revendications précédentes, **caractérisé par le fait que** l'alliage de chrome comprend 10% à 15% de Cr, 0,2% à 0,5% de C et reste Fe.

6. Procédé selon la revendication 5, **caractérisé par le fait que** l'alliage de chrome comprend 13% de Cr, 0,35% de C et reste Fe.

7. Procédé selon l'une des revendications précédentes 1 à 4, **caractérisé par le fait que** l'alliage de chrome comprend 25% à 35% de Cr, 2% à 7% de C, 0,5% à 3% de Mn et reste Fe.

8. Procédé selon la revendication 7, **caractérisé par le fait que** l'alliage de chrome comprend 28% de Cr, 5% de C, 1% de Mn et reste Fe.

9. Procédé selon l'une des revendications précédentes 1 à 3, **caractérisé par le fait que** l'alliage de chrome comprend 25% à 35% de Cr, 2% de Mn, 3,7% de B, 1,7% de Si et reste Fe.

10. Procédé selon la revendication 9, **caractérisé par le fait que** la part de Cr est de 28%.

11. Procédé selon l'une des revendications précédentes 1 à 3, **caractérisé par le fait que** l'alliage de chrome comprend 40% à 50% de Cr, 6% à 12% de Mo, 2% à 5% de C, 2% à 5% de Fe et reste Ni.

12. Procédé selon la revendication 11, **caractérisé par le fait que** l'alliage de chrome comprend 45% de Cr, 9% de Mo, 3,5% de C, 3,5% de Fe et reste Ni.

13. Procédé selon l'une des revendications précédentes, **caractérisé par le fait que** le bronze d'aluminium comprend au moins les éléments Al, Fe et Cu.

14. Procédé selon l'une des revendications précédentes, **caractérisé par le fait que** le bronze d'aluminium comprend 7% à 12% d'Al, 0,5% à 2% de Fe et reste Cu.

15. Procédé selon la revendication 14, **caractérisé par le fait que** le bronze d'aluminium comprend 9% d'Al, 1% de Fe et reste Cu.

16. Procédé selon l'une des revendications précédentes 1 à 13, **caractérisé par le fait que** le bronze d'aluminium comprend 13% à 18% d'Al, 2% à 8% de Fe, 0,5% à 5% de Mn et reste Cu.

17. Procédé selon la revendication 16, **caractérisé par le fait que** le bronze d'aluminium comprend 14% d'Al, 4% de Fe, 2% de Mu et reste Cu.

18. Procédé selon l'une des revendications précédentes, **caractérisé par le fait que** la part du bronze d'aluminium au revêtement est d'au moins 50%.

19. Procédé selon l'une des revendications précédentes, **caractérisé par le fait que** les inclusions (23) qui ne fondent pas lors de l'opération de pulvérisation sont formées par des carbures et/ou oxydes.

20. Procédé selon l'une des revendications précédentes, **caractérisé par le fait que**, pour la formation d'un jet de pulvérisation (5), on fait fondre peu à peu deux fils métalliques (14,15 ; 19,20) à une distance donnée de la matière de base et on les soumet à au moins un jet de gaz dirigé sur la matière de base, un fil métallique (14, 19) étant associé au moins au bronze d'aluminium et un fil métallique (15, 20) étant associé à au moins une autre matière.

21. Procédé selon l'une des revendications précédentes, **caractérisé par le fait que**, pour faire fondre peu à peu les fils métalliques (14,15 ; 19,20), au moins un arc électrique (18) est généré.

22. Procédé selon la revendication 21, **caractérisé par le fait que** les fils métalliques (14,15 ; 19,20) sont connectés à des pôles différents d'une source de courant (17), de préférence le fil métallique (14, 19) associé au bronze d'aluminium étant connecté au pôle positif et l'autre fil métallique (15,20) étant connecté au pôle négatif.

23. Procédé selon l'une des revendications précédentes 20 à 22, **caractérisé par le fait que** le diamètre du fil métallique (14,19) associé au bronze d'aluminium est plus grand que le diamètre de l'autre fil métallique (15,20).

24. Procédé selon l'une des revendications précédentes, **caractérisé par le fait que** le jet de gaz généré pour la pulvérisation comprend de l'air et/ou de l'azote et/ou de l'argon et/ou de l'hélium et/ou de l'hydrogène.

25. Procédé selon l'une des revendications précédentes, **caractérisé par le fait que** le revêtement (4,22) est appliqué en plusieurs couches par pulvérisation.

26. Procédé selon la revendication 25, **caractérisé par le fait que**, dans le cas d'un revêtement à plusieurs couches (4, 22), la ou bien les couche(s) extérieure(s) est ou bien sont réalisée(s) de manière à être plus épaisse(s) que la couche intérieure.

27. Procédé selon la revendication 25 ou 26, **caractérisé par le fait que**, dans le cas d'un revêtement à plusieurs couches (4, 22), la ou bien les couche(s) extérieure(s) est ou bien sont réalisée(s) de manière à être plus dure(s) que la couche intérieure.

28. Procédé selon l'une des revendications précédentes 1 à 24, **caractérisé par le fait que** le revêtement (4, 22) est appliqué en une couche par pulvérisation.

29. Procédé selon l'une des revendications précédentes, **caractérisé par le fait que**, après l'application par pulvérisation, le revêtement (4, 22) est comprimé.
